# NEW EUROPEAN PATENT SPECIFICATION

(11) **EP 2 855 063 B2**
(45) Date of publication and mention of the opposition decision: **07.09.2022**
(45) Mention of the grant of the patent: 23.03.2016
(21) Application number: 13732268.1
(22) Date of filing: 28.05.2013
(51) Int. Cl.: B23K 1/012, B23K 35/28, B23K 35/00, B32B 15/01, C22C 21/02, C22C 21/08, F28F 21/08

(54) **MULTILAYER ALUMINIUM BRAZING SHEET FOR FLUXFREE BRAZING IN CONTROLLED ATMOSPHERE**
MEHRSCHICHTIGES ALUMINIUMLÖTBLECH FÜR FLUSSMITTELFREIES LÖTEN IN KONTROLLIERTER ATMOSPHÄRE
FEUILLE DE BRASAGE D'ALUMINIUM MULTI-COUCHES POUR BRASAGE EXEMPT DE FLUX SOUS ATMOSPHÈRE RÉGULÉE

(30) Priority: 31.05.2012 SE 1250566
(43) Date of publication of application: 08.04.2015
(73) Proprietor: Gränges Sweden AB, 612 31 Finspång (SE)
(72) Inventor: AHL, Linda, S-605 60 Svärtinge (SE); WESTERGÅRD, Richard, S-612 92 Finspång (SE); ABRAHAMSSON, David, S-612 34 Finspång (SE)
(74) Representative: Valea AB
(86) International application number: PCT/SE2013/050606
(87) International publication number: WO 2013/180630

(56) References cited:
- EP-A1- 1 430 988
- EP-A1- 2 065 180
- EP-A2- 0 823 305
- WO-A1-03/089237
- WO-A1-2005/014274
- WO-A1-2005/061743
- WO-A1-2010/000666
- JP-A- H1 088 266
- JP-A- H04 198 448
- US-A- 3 811 177
- TADASHI TAKEMOTO ET AL.: "Effect of Bismuth Addition to Brazing Sheet Claddings on Fluxless Brazability of Aluminum", TRANSACTION OF JWR1, vol. 12, no. 2, 1983, pages 33 - 41

## Description

### Field of invention

The present invention relates to a multilayer aluminium brazing sheet comprising a core material covered with an interlayer, and an outer covering braze layer. The invention also relates to a heat exchanger comprising said improved multilayered aluminium brazing sheet.

### Background

The present invention relates to sheet materials for joining by means of brazing of aluminium materials in an inert or reducing atmosphere, generally at atmospheric pressure, without the need to apply a flux to break up, dissolve or dislodge the superficial oxide layer.

A challenge today is to design and manufacture materials and components for the heat exchanger industry at as low final cost and with as high quality as possible. The most commonly used technology in production of heat exchangers is brazing in a controlled atmosphere normally consisting of nitrogen with as low amounts of oxidising impurities (primarily oxygen gas and water vapour) as possible. This process is known as controlled atmosphere brazing ("CAB") and involves the application of an Al-K-F based flux, e.g. Nocolok flux, on the surfaces to be joined prior to brazing. The flux breaks up, dislodges or dissolves the superficial oxide layer of the filler metal to facilitate wetting between a molten filler and the surfaces of individual heat exchanger components. The flux also prevents or reduces formation of new oxides during the joint formation. Post-brazed flux residues are, however, often considered to be harmful for the heat exchanger as they may detach from the brazed aluminium surfaces and clog internal channels, thereby preventing an effective use of the heat exchanger. Sometimes arguments are heard that the use of flux in some cases promotes corrosion and erosion and lead to less effective units and sometimes premature failure of the unit. There are also concerns related to chemical reactions taking place between flux residue and corrosion inhibitors used in the medium in e.g. the radiator circuit that may cause damage to the system. Apart from the purely function related drawbacks of flux usage, the impact of flux and fluxing on e.g. the working environment, cost, investments in brazing related hardware and it's maintenance, energy and the natural environment is severe.

In addition to above mentioned limitations, the oxide removal efficiency of a CAB flux is reduced by the use of Mg as an alloying element in the material to be brazed. This is due to a reaction between Mg and the flux forming compounds that have a very high melting temperature and that prevent wetting, fillet formation and joint growth. This incompatibility is troublesome as Mg is very efficient when it comes to providing strength in aluminium materials. Consequently, CAB has been constrained to non heat treatable (NHT) alloys and alloys that contain a low amount of Mg. It is well known that Mg starts to affect brazing outcome already at trace levels and at levels of 0.2% the majority of CAB users have large problems with joint formation. The problem can be contained to some extent by increasing the additions of flux or by the use of exclusive and costly Cs-containing flux grades. The problem is, however, not solved but rather shifted towards marginally higher Mg levels:

To be able to produce heat exchangers using CAB without the application of flux, development of new material concepts and designs is thus necessary to make braze joint formation possible.

All temper and alloy designations hereafter used refer to the Aluminium Association designation Standards and Data and the Registration Records as published by the Aluminium Association in 2007. All percentages with respect to chemical content in an alloy is henceforth understood to denote the weight percentage.

The patent EP1306207B1 describes an aluminium brazing alloy suitable for brazing in an inert gas without the use of a flux. This invention is based on a multi layered brazing sheet, where the outer material is a thin covering layer covering an Al-Si based alloy containing 0.1 to 0.5% Mg and 0.01 to 0.5% Bi, and a core material. During the temperature ramp up stage of a braze cycle the intermediate Al-Si layer will first start to melt and expand volumetrically to break up the thin covering layer allowing molten filler metal to seep through the cracks and on to the surface of the brazing sheet.

In WO2008/155067A1 a method for brazing without flux is disclosed. The invention is based on a multilayered aluminium sheet comprising a thin covering layer, an Al-Si brazing material as intermediate layer between the covering layer and the core. The covering alloy and the core alloy have a solidus temperature higher than the liquidus temperature of the brazing material. The Al-Si brazing alloy contains 0.01-0.09% Mg and 0.01-0.5% Bi. The content of Mg of the core is preferably < 0.015%. In this document fluxless brazing is made possible by keeping the total Mg content of the brazing sheet less than 0.06%.

The brazing sheet configuration of the above identified prior art documents are similar. Both are based on a core, an intermediate braze metal which contains Mg and Bi, covered by a thin covering layer. There is a potential risk with such a brazing sheet structure. There might be a time lag between filler melting and wetting. The influence of gravity on the melt can cause filler flow under the surface oxide, resulting in inhomogeneous joint size and large localised accumulations of molten filler.

The methods for fluxless brazing available in the prior art have a constraint in that they require either an external covering with higher melting temperature than the underlying braze, or is a combination of two different braze alloy layers that are both intended to melt during the brazing process. This does not allow for simultaneous sophisticated corrosion potential gradient design, high strength sheet design and joining without flux. There is also a desire to improve the brazing process.

The demands from primarily the automotive industry are increasing regarding the amount of residual flux that is allowed in a heat exchanger system. It is difficult and costly to apply small and repeatable flux amounts on localised areas on the internal surfaces of a heat exchanger to repeatedly form high quality internal joints and this invention provides a clear advantage in that aspect of heat exchanger production.

Thus, there is still a need to provide a brazing sheet which overcomes the above identified problems.

Other examples of previously known aluminium alloy brazing sheets are known from US 6,627,330 B1 and WO2010/052231, which both disclose outermost layers with high or intentionally added Mg content.

EP 1 430 988 A1 discloses an aluminium alloy brazing sheet suitable for fluxless brazing on the inside of a tube. The brazing sheet may have a structure comprising at least four layers in the sequence of a filler alloy, a diffusion prevention layer, a core and a filler alloy.

JP H04-198448 A discloses a core material clad with a sacrificial material on one side of the core and a braze material on the other side of the core.

WO 2005/014274 A1 discloses an aluminium brazing sheet comprising a core, an interlayer and a filler material. The brazing sheet may be used in various brazing processes such as vacuum brazing, CAB brazing using a flux, or fluxless brazing using nickel and/or iron and/or cobalt.

EP 0 823 305 A2 discloses a four layered aluminium alloy cladding member to be used in a vacuum brazing process and comprising a core member cladded with an intermediate layer and the other side of both of the core and the intermediate members cladded with Al-Si-Mg type cladding member.

### Summary of the invention

The objective of the present invention is to provide an aluminium alloy brazing sheet that can be brazed in an inert or reducing atmosphere, without the need to apply a flux, which results in enhanced braze joints, and which allows sophisticated corrosion potential design.

The object is achieved by the aluminium alloy brazing sheet in accordance with independent claim 1. Embodiments are defined by the dependent claims.

The aluminium alloy brazing sheet according to the present invention is especially suitable for brazing to one or more components other than the brazing sheet itself, in particular brazing of fins or headers to the outer surface of a tube made from the aluminium brazing sheet.

The aluminium alloy brazing sheet comprises an aluminium alloy core material covered by an interlayer of an aluminium alloy, which in turn is covered by an Al-Si braze alloy. The aluminium alloy of the interlayer comprises ≤1.0% Si and 0.2-2.5 % Mg, preferably ≥0.3% Mg, more preferably ≥0.5% Mg. The Al-Si braze alloy comprises 5-14% Si and 0.05-0.2% Bi, preferably 0.07-0.2% Bi, ≤0.8 % Fe, ≤6 % Zn, ≤0.1 % Sn, ≤0.1 % In, ≤0.3 % Cu, ≤0.15 % Mn, ≤0.05 % Sr, and unavoidable impurities each in amounts less than 0.05 wt-% and a total impurity content of less than 0.2 wt-%, the balance consisting of aluminium. The core material and the interlayer has a higher melting temperature than the braze alloy. Furthermore, the interlayer is sacrificial to the core.

The present invention is thus based on a completely different brazing sheet configuration than described in for example EP1306207B1 and WO2008/155067A1 to achieve good brazeability without flux in controlled atmosphere and added corrosion protection, and circumvents the possible limitations of the prior art.

According to one embodiment, the aluminium alloy of the interlayer comprises at least 0.9 % Mg.

According to yet another embodiment, the aluminium alloy of the interlayer comprises at most 2.2 % Mg.

In accordance with one embodiment, the interlayer is directly adjacent the core material, i.e. without any intermediate layer between the interlayer and the core material. According to another embodiment, the braze layer is directly adjacent the interlayer, i.e. without any intermediate layer between the braze layer and the interlayer. According to yet another embodiment, the interlayer is sandwiched between the core layer and the braze alloy without any additional layers between the core layer and the braze alloy.

The aluminum alloy brazing sheet is used to produce brazed products, such as heat exchangers.

Since no flux is present on the outside surfaces of the heat exchanger produced from the brazing sheet according to the invention any difficulties in detachment of flux residue that may enter e.g. the passenger compartment of the vehicle are avoided. This also improves the visual appearance of the heat exchanger. Since no flux is present on the internal surfaces of the heat exchanger any difficulties in clogging, erosion, and chemical reactions between flux and cooling media and other perceived drawbacks with flux residue is avoided.

There is also a clear cost advantage to be had in brazing heat exchanger units without the use of flux as it eliminates not only the cost of the flux itself but also shortens the lead time through the brazing line, allows for lower labour costs, liberates floor space in the factory, decreases demands on maintenance of brazing hardware and decreases demands on housekeeping. Also, important benefits are to be had in a better working environment for people, less disposal of solid waste and waste water from the fluxing system and smaller amounts of harmful gaseous effluents from the brazing process.

### Detailed description of the invention

The aluminium alloy brazing sheet of the present invention consists of an aluminium based core, covered on one or two sides by a Mg-rich aluminium alloy as an interlayer which in turn is covered by an Al-Si braze alloy, where said braze contains an addition of Bi. The liquidus temperature of the Al-Si braze alloy is lower than the solidus temperature of the core and the interlayer, which has a higher liquidus temperature than the highest allowed brazing temperature. The Mg from the interlayer should diffuse out to the external surface of the braze during the heating up to brazing temperature. If a correct amount of Mg arrives there and at the correct time the oxide will be broken up to make it possible for molten filler metal to wet any countersurface and form a joint, while having an intact interlayer that assists in providing a corrosion potential gradient through the thickness of the sheet post brazing. In the present invention the Mg content of the filler material, i.e. the braze material, is preferably < 0.01%. The present invention shows that optimum brazeability is achieved with Mg in an interlayer between the core and the filler metal.

The invention is hereafter described as a three layered aluminium alloy brazing sheet where brazing occurs on one side of the sheet. However, the invention can be used to create braze joints on both sides of the core, in which case the brazing sheet will be built up by five layers. It can also be covered by a sacrificial waterside on one side and be a four layered sheet or a waterside with an interlayer between the core and the waterside cladding that will provide a five layered sheet.

The present invention provides an aluminium alloy brazing sheet product comprising: a core material covered by a Mg-rich interlayer which in turn is covered by an Al-Si alloy which contains Bi to enhance the brazing performance, where the said core material and the interlayer has a higher melting temperature than the brazing alloy and indeed higher melting temperatures than the intended brazing temperature. The Mg from the interlayer diffuses through the braze layer out to the external surface of the braze during the heating up to brazing temperature. If a correct amount of Mg arrives there and at the correct time the superficial oxide will be broken up to make it possible for molten filler metal to wet any countersurface and form a joint, while having an intact interlayer that assists in providing a corrosion potential gradient through the thickness of the sheet post brazing. To allow a good joint to be formed in a heat exchanger the braze should melt at around 577°C and the heating may reach temperatures in the interval of 585-610°C. Normally, one tends to aim in the interval of 595-605°C. This necessitates that the liquidus of the interlayer and core layer be higher and they should both have liquidus temperatures in excess of 615°C.

### The braze alloy

The Al-Si braze alloy preferably contains less than 0.02% Mg, preferably <0.01% Mg in order to obtain a good brazing. It is important that the Mg content in the thin braze layer is kept low in order to avoid excessive growth of oxides on the surface during heating before brazing. The addition of Bi into the braze layer according to the present invention enhances joint formation, so that the joint is formed more rapidly and has a larger size. It may also contain Zn, Sn and In that decrease the corrosion potential of aluminium alloys or Cu and Mn that increase the corrosion potential. Sr is a powerful modifier to achieve a small Si particle size and can also be present in technologically motivated amounts of up to 500ppm.

The amount of Si in the Al-Si braze alloy can be chosen to suit the special brazing process desired and is usually between 5 and 14 % Si, but preferably 7 to 13% Si is used.

A preferred composition of the Al-Si braze alloy thus contains

| | |
|---|---|
| Si | 5 to 14%, preferably 7 to 13%, |
| Mg | <0.02 %, preferably <0.01 %, |
| Bi | 0.05 to 0.2 %, preferably 0.07 to 0.2 %, |
| Fe | ≤0.8 % |
| Cu | ≤0.3 %, |
| Mn | ≤0.15 %, |
| Zn | ≤6 %, |
| Sn | ≤0.1 % |
| In | ≤0.1 % |
| Sr | ≤0.05 %, and |

unavoidable impurities each in amounts less than 0.05 % and a total impurity content of less than 0.2 %, the balance consisting of aluminium.

### The core material

The brazing sheet of the present invention can be used with any aluminium brazing sheet core material. A suitable core material can be any AA3xxx series alloy. It has been found within the present invention that joint formation in brazing works well also with Mg added to the core alloy, which means that the core can be given a higher strength. The core should also contain Mn for strength, brazability and corrosion performance and Cu to modify the corrosion performance and for post-brazed strength. It can also contain Si for strength and dispersoid formation purposes as well as Ti for strength, corrosion and as grain refiner in casting. The elements of Zr, Cr, V and Sc can be present for strength modification and as dispersoid forming purposes.

Hence the core alloy preferably contains

| | |
|---|---|
| Mn | <2.0 %, |
| Cu | ≤1.2%. |
| Fe | ≤1.0%, |
| Si | ≤1.0 %, |
| Ti | ≤0.2 %, |
| Mg | ≤2.5 %, preferably 0.03-2.0 % |
| Zr, Cr, V and/or Sc | ≤0.2 % in total, and |

unavoidable impurities each in amounts less than 0.05 % and a total impurity content of less than 0.2 %, the balance consisting of aluminium.

### The interlayer

### The interlayer

The thin interlayer consists of an aluminium alloy, having a melting point higher than the melting point of the covering Al-Si braze metal, will need to contain a substantial amount of Mg to allow diffusion through the superficial braze to break up oxide on the superficial surface. The interlayer should therefore have a Mg-content higher than 0.2 %. The most preferred case is that Mg is added to the alloy in amounts of 0.3% or more, most preferably more than 0.5%. The joint formation is feasible with 0.5% in the interlayer, as shown in the examples. It is however significantly better with at least 0.9% Mg in the interlayer. The rollability of the material may be difficult when the Mg content of the interlayer exceeds 2.5%. Preferably, the maximum content of Mg in the interlayer does not exceed 2.2%. Thus, the Mg content of interlayer is 0.2-2.5 %, preferably 0.3-2.5%, more preferably 0.5-2.5%, and most preferably 0.9-2.2 %. The interlayer may also contain Si, Mn, Fe, Ti, Cu, Zn, Cr, Zr, V and Sc for the same reasons as the core material. Zn, Sn and In may be included to decrease the corrosion potential of the alloy and to help create a suitable post-brazed corrosion potential gradient through the thickness of the sheet.

The interlayer alloy thus preferably contains,

| | |
|---|---|
| Mg | 0.2-2.5 %, preferably ≥0.3%, more preferably ≥0.5%, most preferably 0.9-2.2 % |
| Mn | <2.0 %, |
| Cu | ≤1.2 %, |
| Fe | ≤1.0 %, |
| Si | ≤1.0 %, |
| Ti | ≤0.2 %, |
| Zn | ≤6 %, |
| Sn | ≤0.1 %, |
| In | ≤0.1 %, |
| Zr, Cr, V | and/or Sc ≤0.2 % in total, and |

unavoidable impurities each in amounts less than 0.05 %, and a total impurity content of less than 0.2 %, the balance consisting of aluminium.

### The composite brazing sheet

By the provision of an aluminium alloy brazing sheet product comprising: a core material covered by an interlayer comprising Mg, which in turn is covered by an Al-Si alloy which contains Bi to enhance the brazing performance, where the said core material and the interlayer has a higher melting temperature than the brazing alloy and indeed higher melting temperatures than the intended brazing temperature. The brazing sheet can be effectively brazed in controlled atmosphere without the use of flux. The opposite side can be unclad, arranged in a similar configuration, clad with a sacrificial cladding, or an Al-Si braze cladding. However, the brazing sheets that can be used within the present invention are not limited to the above configurations.

The total thickness of the aluminium brazing sheet is in between 0.1 and 4 mm, which is suitable in the manufacture of heat exchangers. The thickness of the interlayer is preferably 5 to 200µm, so as to provide effective oxide disruption during brazing. The thickness of the braze layer may be between 5 and 100 µm. The total clad layer thickness relative to the total thickness of the multi layered brazing sheet is preferably of 3 to 30%. The thickness of the braze is chosen so that sufficient filler is available to provide adequate post-brazed joint size. Also, the thickness should be chosen such that a suitable amount of Mg will diffuse through the braze layer to the outer oxide during the braze heating, thereby providing adequate oxide break-up and good wetting. The thickness of the interlayer relative to the braze alloy layer is between 25% and 250%, with most applications requiring a thickness ratio expected in the interval of 50% to 150%. The suitable temperature interval at which the brazing is being carried out is in the range of 580°C to 610°C, and preferably 590°C to 605°C.

The chemistry of the interlayer and cores should be chosen such that they after brazing provide a suitable corrosion potential gradient. This means that the interlayer should be suitably sacrificial to the core.

The sheet design is ideally such that a sufficient amount of Mg should reach the oxide/metal interface to break up the oxide at the right time during the braze heating cycle. If too much Mg reaches the oxide/metal interface too early during the braze heating cycle the excess Mg may assist in producing a too thick oxide and prevent wetting and joint growth. If too little Mg reaches the oxide/metal interface or if it arrives too late during the braze heating cycle the wetting and joint growth will be incomplete or absent. This is because the filler may flow underneath the layer of unbroken oxide. Therefore, the braze heating cycle is very important and should be considered together with the sheet design, the thermomechanical production route, furnace characteristics and the remaining heat exchanger assembly design to provide a successful fluxfree brazing outcome.

The invention further provides a heat exchanger comprising the aluminium alloy brazing sheet as described above.

### Production of the brazing sheet

Each of the above described alloys may be cast using direct chill (DC) casting or continuous twin roll casting or cast continuously in a belt casting machine. The choice of casting technique is decided by technical, economical and capacity considerations. The core alloy is cast as a slab using a DC casting route, whereas the intermediate layer and the outer thin layer is cast using either DC casting or continuous casting techniques.

The predominant technique used today is DC casting and then the slabs of the braze alloy ingot and the interlayer alloy ingot are both scalped and then heated in a furnace to a temperature between 350 and 550°C and the duration at the soaking temperature varies from 0 to 20 hours. Subsequently both alloys are hot rolled to the desired thickness and cut to suitable lengths. The interlayer plate is then placed on the scalped surface of the core ingot and the braze alloy plate is then placed on the surface of the interlayer. The plates are held in place on the core slab by means of seam welds along two opposite sides by means of MIG welding, or by means of steel banding or by other suitable techniques to make a manageable ingot package. The package is then placed into a preheating furnace. The package is heated to a temperature between 350°C and 550°C and the duration at the soaking temperature is between 0 and 20 hours. After that the clad package is hot rolled, cold rolled to final dimension, stretched to improve flatness and slit to delivery width. Intermediate and final heat treatments to achieve easier production and the correct delivery temper is done as needed.

### Examples

All alloys of the examples were cast using laboratory casting equipment into so-called book moulds producing small slabs with length 150mm, width 90mm and thickness 20mm. The chemical compositions of the alloys tested for brazeability can be seen in table 1.

Each slab was scalped, heated from room temperature to 450°C during 8 hours, soaked at 450°C for 2 hours and cooled in ambient air. Then the materials were rolled to a suitable thickness and soft annealed between passes when necessary to facilitate easy rolling. Then core-, intermediate braze layer-and outer layer materials were combined to make three layer clad packages where the layers were attached to each other by means of cold rolling. The materials were cold rolled to of 0.25mm thickness, which provided a single side cladding with 10% interlayer and 10% braze layer, with intermediate soft annealings when necessary to provide easy rolling and given a final back annealing to an H24 temper to provide large recrystallized grains in the core during the subsequent brazing procedure. Instead of temper annealing one may provide worked tempers, e.g. H12, H14 or H112, to provide large recrystallized grains.

**Table 1 Chemical compositions in weight-% of tested alloys from melt analyses with OES.**

| **Alloy** | **Type** | **Si** | **Fe** | **Cu** | **Mn** | **Mg** | **Ti** | **Zr** | **Bi** |
|---|---|---|---|---|---|---|---|---|---|
| A | Core | 0.14 | 0.50 | 0.12 | 1.09 | <0.01 | 0.02 | <0.01 | <0.01 |
| B | Core | 0.07 | 0.22 | 0.81 | 1.70 | <0.01 | 0.05 | 0.14 | <0.01 |
| C | Core/interlayer | 0.75 | 0.22 | 0.29 | 0.60 | 0.31 | 0.15 | <0.01 | <0.01 |
| D | Core | 0.68 | 0.25 | 0.30 | 0.03 | 0.42 | 0.14 | <0.01 | <0.01 |
| E | Core/interlayer | 0.05 | 0.20 | 0.28 | 1.30 | 0.22 | 0.02 | <0.01 | <0.01 |
| F | Core/interlayer | 0.50 | 0.22 | <0.01 | 0.06 | 0.67 | 0.01 | <0.01 | <0.01 |
| G | Interlayer | 0.05 | 0.17 | <0.01 | <0.01 | 0.51 | <0.01 | <0.01 | <0.01 |
| H | Interlayer | 0.03 | 0.15 | <0.01 | <0.01 | 0.96 | <0.01 | <0.01 | <0.01 |
| I | Interlayer | 0.03 | 0.15 | <0.01 | <0.01 | 1.9 | <0.01 | <0.01 | <0.01 |
| J | Interlayer | 0.07 | 0.28 | <0.01 | 0.80 | 1.1 | <0.01 | <0.01 | <0.01 |
| K | Interlayer | 0.09 | 0.33 | <0.01 | 1.7 | 1.0 | <0.01 | <0.01 | <0.01 |
| L | Interlayer | 0.05 | 0.17 | <0.01 | <0.01 | <0.01 | <0.01 | <0.01 | <0.01 |
| M | Braze | 10.0 | 0.23 | <0.01 | 0.01 | 1.26 | <0.01 | <0.01 | 0.09 |
| N | Braze | 10.2 | 0.17 | <0.01 | <0.01 | 0.11 | <0.01 | <0.01 | 0.12 |
| O | Braze | 8.0 | 0.18 | <0.01 | <0.01 | <0.01 | <0.01 | <0.01 | 0.11 |
| P | Braze | 8.0 | 0.18 | <0.01 | <0.01 | <0.01 | <0.01 | <0.01 | <0.01 |
| Q | Braze | 10.2 | 0.17 | <0.01 | <0.01 | <0.01 | <0.01 | <0.01 | 0.12 |

The brazing was made in a laboratory glass furnace with approximately 3 dm³ brazing chamber. The furnace was flushed with nitrogen during the entire brazing cycle with a rate of 10 standard litres per minute. The brazing cycle was a linear heating from room temperature to 600°C in 10 minutes, soaking for 3 minutes at 600°C followed by cooling in air to room temperature. The sample set-up was a simple unclad bent angle on coupon where the clad materials were used as coupon and an unclad AA3003 with 0.5 mm gauge was used as the angle. All brazing was made unfluxed. The samples were examined by visual examination of the braze joints and a representative selection of some of the results is given below.

**Table 2, selected experimental results**

| | Comment | Core | Interlayer | Braze | Result |
|---|---|---|---|---|---|
| Ex 1 Standard CAB sheet | Comparative | B | --- | P | No joining between clad coupon and unclad angle. |
| Ex 2 Standard vacuum brazing sheet. | Comparative | A | --- | M | No joining between clad coupon and unclad angle. |
| Ex 3 | Inventive | B | G | O | Joint formed between clad coupon and unclad angle. Small. |
| Ex 4 | Inventive | C | H | Q | Joint formed between clad coupon and unclad angle. |
| Ex 5 | Inventive | D | I | O | Joint formed between clad coupon and unclad angle. |
| Ex 6 | Inventive | E | J | Q | Joint formed between clad coupon and unclad angle. |
| Ex 7 | Inventive | F | K | O | Joint formed between clad coupon and unclad angle. |
| Ex 8 | Comparative | B | G | N | No joining, too much Mg in braze |
| Ex 9 | Inventive | B | C | O | Joint formed between clad coupon and unclad angle, very slightly sluggish. |
| Ex 10 | Inventive | B | E | O | Joining, but reluctantly |
| Ex 11 | Inventive | B | F | O | Joint formed between clad coupon and unclad angle. |
| Ex 12 | Comparative | F | K | P | No joining, no Bi in braze |
| Ex 13 | Comparative | B | L | O | No joining, no Mg in interlayer |

## Claims

1. An aluminium alloy brazing sheet for fluxfree brazing suitable for brazing to components other than the aluminium alloy brazing sheet itself, the aluminium alloy brazing sheet comprising an aluminium alloy core material covered by an interlayer of an aluminium alloy comprising ≤1.0wt-% Si and 0.2-2.5 wt-% Mg, , the interlayer being covered by an Al-Si braze alloy which comprises 5-14wt-% Si, <0.02 wt-% Mg, 0.05-0.2 wt-% Bi, ≤0.8 wt-% Fe, ≤6 wt-% Zn, ≤0.1 wt-% Sn, ≤0.1 wt-% In, ≤0.3 wt-% Cu, ≤0.15 wt-% Mn, ≤0.05 wt-% Sr, and unavoidable impurities each in amounts less than 0.05 wt-% and a total impurity content of less than 0.2 wt-%, the balance consisting of aluminium, and wherein said core material and the interlayer has a higher melting temperature than the braze alloy and wherein the interlayer is sacrificial to the core.

2. An aluminium alloy brazing sheet according claim 1, where the interlayer alloy contains,
| | |
|---|---|
| Mg | 0.2-2.5 wt-%, preferably ≥0.2 wt-%, more preferably ≥0.3wt-%, most preferably 0.5-2.5wt-% |
| Mn | <2.0 wt-%, |
| Cu | ≤1.2 wt-%, |
| Fe | ≤1.0 wt-%, |
| Si | ≤1.0 wt-%, |
| Ti | ≤0.2 wt-%, |
| Zn | ≤6 wt-%, |
| Sn | ≤0.1 wt-%, |
| In | ≤0.1 wt-%, and |
| Zr, Cr, V and/or Sc | ≤0.2 wt-% in total, and |
unavoidable impurities each in amounts less than 0.05 wt-%, and a total impurity content of less than 0.2 wt-%, the balance consisting of aluminium.

3. An aluminium alloy brazing sheet according to any of claims 1-2, where the core material is a 3XXX alloy, preferably containing
| | |
|---|---|
| Mn | <2.0 wt-%, |
| Cu | ≤1.2 wt-%, |
| Fe | ≤1.0 wt-%, |
| Si | ≤1.0 wt-%, |
| Ti | ≤0.2 wt-%, |
| Mg | ≤2.5 wt-%, preferably 0.03-2.0 wt-% |
| Zr, Cr, V and/or Sc | ≤0.2 wt-% in total, and |
unavoidable impurities each in amounts less than 0.05 wt-% and a total impurity content of less than 0.2 wt-%, the balance consisting of aluminium.

4. An aluminium alloy brazing sheet according to any of claims 1-3, where the Al-Si braze alloy contains 0.07 to 0.2 wt-% Bi.

5. An aluminium alloy brazing sheet according to any of claims 1-4, where the Al-Si braze alloy contains <0.01 wt-% Mg.

6. An aluminium alloy brazing sheet according to any of the claims 1-5, where the Al-Si braze alloy contains 7 to 13 wt-% Si.

7. An aluminium alloy brazing sheet according to any of claims 1-6, where the melting point of the interlayer and that of the core is >615 °C.

8. An aluminium alloy brazing sheet according to any of claims 1-7, where the melting point of the braze alloy is 550-590 °C.

9. An aluminium alloy brazing sheet according to any of claims 1-8, where the thickness of the interlayer to the thickness of the braze alloy layer is 25-250%, preferably 50-150%.

10. An aluminium alloy brazing sheet according to any of claims 1-9, where the thickness of the interlayer is 5-200 µm.

11. An aluminium alloy brazing sheet according to any of claims 1-10, where the brazing sheet has a braze or a sacrificial clad layer on the side of the core opposite the side comprising the interlayer and the braze alloy.

12. An aluminium alloy brazing sheet according to claim 11, where the sacrificial clad on the opposite side of the core is covered by a sacrificial or braze layer.

13. A brazed product comprising an aluminium alloy brazing sheet according to any of the preceding claims wherein the interlayer is sacrificial to the core.

14. Method of brazing a heat exchanger without using flux using the aluminium alloy brazing sheet of claims 1-12 for the fins, tubes or header plates.

15. Heat exchanger comprising an aluminium brazing sheet according to any of claims 1 to 12.

16. Use of an aluminium alloy brazing sheet according to any of claims 1 to 12 for producing heat exchangers.

## Revendications

1. Tôle de brasage en alliage d'aluminium pour le brasage sans flux convenant au brasage sur des composants autres que la tôle de brasage en alliage d'aluminium elle-même, la tôle de brasage en alliage d'aluminium comprenant un matériau noyau en alliage d'aluminium recouvert d'une couche intermédiaire d'un alliage d'aluminium comprenant ≤ 1,0 % en poids de Si et 0,2 à 2,5 % en poids de Mg, la couche intermédiaire étant recouverte d'un alliage de brasage Al-Si qui comprend 5 à 14 % en poids de Si, < 0,02 % en poids de Mg, 0,05 à 0,2 % en poids de Bi, ≤ 0,8 % en poids de Fe, 6 % en poids de Zr 0,1 % en poids de Sn, ≤ 0,1 % en poids d'In, ≤ 0,3 % en poids de Cu, ≤ 0,15 % en poids de Mn, ≤ 0,05 % en poids de Sr et des impuretés inévitables chacune en quantités inférieures à 0,05 % en poids et une teneur totale en impuretés inférieure à 0,2 % en poids, le complément étant constitué d'aluminium, et ledit matériau noyau et la couche intermédiaire ayant une température de fusion plus élevée que l'alliage de brasage et la couche intermédiaire étant sacrificielle pour le noyau.

2. Tôle de brasage en alliage d'aluminium selon la revendication 1, dans laquelle l'alliage de couche intermédiaire contient,
| | |
|---|---|
| Mg | 0,2 à 2,5 % en poids, de préférence ≥ 0,2 % en poids, plus préférablement ≥ 0,3 % en poids, idéalement 0,5 à 2,5 % en poids |
| Mn | <2,0 % en poids, |
| Cu | 1,2 % en poids, |
| Fe | ≤ 1,0 % en poids, |
| Si | ≤ 1,0 % en poids, |
| Ti | ≤ 0,2 % en poids, |
| Zn | 6 % en poids, |
| Sn | ≤ 0,1 % en poids, |
| In | ≤ 0,1 % en poids, et |
| Zr, Cr, V et/ou Sc | ≤ 0,2 % en poids au total, et |
des impuretés inévitables chacune en quantités inférieures à 0,05 % en poids, et une teneur totale en impuretés inférieure à 0,2 % en poids, le complément étant constitué d'aluminium.

3. Tôle de brasage en alliage d'aluminium selon l'une quelconque des revendications 1 à 2, dans laquelle le matériau de noyau est un alliage 3XXX, contenant de préférence
| | |
|---|---|
| Mn | <2,0 % en poids, |
| Cu | 1,2 % en poids, |
| Fe | ≤ 1,0 % en poids, |
| Si | ≤ 1,0 % en poids, |
| Ti | ≤ 0,2 % en poids, |
| Mg | ≤ 2,5 % en poids, de préférence 0,03 à 2,0 % en poids |
| Zr, Cr, V et/ou Sc | ≤ 0,2 % en poids au total, et |
des impuretés inévitables chacune en quantités inférieures à 0,05 % en poids et une teneur totale en impuretés inférieure à 0,2 % en poids, le complément étant constitué d'aluminium.

4. Tôle de brasage en alliage d'aluminium selon l'une quelconque des revendications 1 à 3, dans laquelle l'alliage de brasage Al-Si contient 0,07 à 0,2 % en poids de Bi.

5. Tôle de brasage en alliage d'aluminium selon l'une quelconque des revendications 1 à 4, dans laquelle l'alliage de brasage Al-Si contient < 0,01 % en poids de Mg.

6. Tôle de brasage en alliage d'aluminium selon l'une quelconque des revendications 1 à 5, dans laquelle l'alliage de brasage Al-Si contient 7 à 13 % en poids de Si.

7. Tôle de brasage en alliage d'aluminium selon l'une quelconque des revendications 1 à 6, dans laquelle le point de fusion de la couche intermédiaire et celui du noyau est > 615 °C.

8. Tôle de brasage en alliage d'aluminium selon l'une quelconque des revendications 1 à 7, dans laquelle le point de fusion de l'alliage de brasage est de 550 à 590 °C.

9. Tôle de brasage en alliage d'aluminium selon l'une quelconque des revendications 1 à 8, dans laquelle l'épaisseur de la couche intermédiaire par rapport à l'épaisseur de la couche d'alliage de brasage est de 25 à 250 %, de préférence de 50 à 150 %.

10. Tôle de brasage en alliage d'aluminium selon l'une quelconque des revendications 1 à 9, dans laquelle l'épaisseur de la couche intermédiaire est de 5 à 200 µm.

11. Tôle de brasage en alliage d'aluminium selon l'une quelconque des revendications 1 à 10, dans laquelle la tôle de brasage a une brasure ou une couche de placage sacrificielle sur le côté du noyau opposé au côté comprenant la couche intermédiaire et l'alliage de brasage.

12. Tôle de brasage en alliage d'aluminium selon la revendication 11, dans laquelle le revêtement sacrificiel sur le côté opposé du noyau est recouvert d'une couche sacrificielle ou de brasage.

13. Produit brasé comprenant une tôle de brasage en alliage d'aluminium selon l'une quelconque des revendications précédentes, dans lequel la couche intermédiaire est sacrificielle pour le noyau.

14. Procédé de brasage d'un échangeur de chaleur sans utiliser de flux à l'aide de la tôle de brasage en alliage d'aluminium des revendications 1 à 12 pour les ailettes, les tubes ou les plaques collectrices.

15. Échangeur de chaleur comprenant une tôle de brasage en aluminium selon l'une quelconque des revendications 1 à 12.

16. Utilisation d'une tôle de brasage en alliage d'aluminium selon l'une quelconque des revendications 1 à 12 pour la production d'échangeurs de chaleur.

## Patentansprüche

1. Hartlötblech aus einer Aluminiumlegierung zum flussmittelfreien Hartlöten, das zum Hartlöten an anderen Komponenten als dem Hartlötblech aus der Aluminiumlegierung selbst geeignet ist, wobei das Hartlötblech aus der Aluminiumlegierung ein Kernmaterial aus der Aluminiumlegierung umfasst, das durch eine Zwischenschicht einer Aluminiumlegierung bedeckt ist, die ≤1,0 Gew.-% Si und 0,2-2,5 Gew.-% Mg umfasst, wobei die Zwischenschicht durch eine Al-Si-Hartlötlegierung bedeckt ist, die Folgendes umfasst: 5-14 Gew.-% Si, <0,02 Gew.-% Mg, 0,05-0,2 Gew.-% Bi, ≤0,8 Gew.-% Fe, ≤6 Gew.-% Zn, ≤0,1 Gew.-% Sn, ≤0,1 Gew.-% In, ≤0,3 Gew.-% Cu, ≤0,15 Gew.-% Mn, ≤0,05 Gew.-% Sr und unvermeidbare Verunreinigungen jeweils in Mengen von weniger als 0,05 Gew.-% und einen Gesamtverunreinigungsgehalt von weniger als 0,2 Gew.-%, wobei der Rest aus Aluminium besteht, und wobei das Kernmaterial und die Zwischenschicht eine höhere Schmelztemperatur als die Hartlötlegierung aufweisen und wobei die Zwischenschicht eine Opferschicht für den Kern ist.

2. Hartlötblech aus der Aluminiumlegierung nach Anspruch 1, wobei die Zwischenschichtlegierung Folgendes enthält:
| | |
|---|---|
| Mg | 0,2-2,5 Gew.-%, bevorzugt ≥0,2 Gew.-%, stärker bevorzugt ≥0,3 Gew.-%, am stärksten bevorzugt 0,5-2,5 Gew.-% |
| Mn | <2,0 Gew.-%, |
| Cu | ≤1,2 Gew.-%, |
| Fe | ≤1,0 Gew.-%, |
| Si | ≤1,0 Gew.-%, |
| Ti | ≤0,2 Gew.-%, |
| Zn | ≤6 Gew.-%, |
| Sn | ≤0,1 Gew.-%, |
| In | ≤0,1 Gew.-% und |
| Zr, Cr, V und/oder Sc zu insgesamt | ≤0,2 Gew.-%, und |
unvermeidbare Verunreinigungen jeweils in Mengen von weniger als 0,05 Gew.-% und einen Gesamtverunreinigungsgehalt von weniger als 0,2 Gew.-%, wobei der Rest aus Aluminium besteht.

3. Hartlötblech aus der Aluminiumlegierung nach einem der Ansprüche 1-2, wobei das Kernmaterial eine 3XXX-Legierung ist, die bevorzugt Folgendes enthält:
| | |
|---|---|
| Mn | <2,0 Gew.-%, |
| Cu | ≤1,2 Gew.-%, |
| Fe | ≤1,0 Gew.-%, |
| Si | ≤1,0 Gew.-%, |
| Ti | ≤0,2 Gew.-%, |
| Mg | ≤ 2,5 Gew.-%, bevorzugt 0,03-2,0 Gew.-% |
| Zr, Cr, V und/oder Sc zu insgesamt | ≤0,2 Gew.-%, und |
unvermeidbare Verunreinigungen jeweils in Mengen von weniger als 0,05 Gew.-% und einen Gesamtverunreinigungsgehalt von weniger als 0,2 Gew.-%, wobei der Rest aus Aluminium besteht.

4. Hartlötblech aus der Aluminiumlegierung nach einem der Ansprüche 1-3, wobei die Al-Si Hartlötlegierung 0,07 bis 0,2 Gew.-% Bi enthält.

5. Hartlötblech aus der Aluminiumlegierung nach einem der Ansprüche 1-4, wobei die Al-Si Hartlötlegierung <0,01 Gew.-% Mg enthält.

6. Hartlötblech aus der Aluminiumlegierung nach einem der Ansprüche 1-5, wobei die Al-Si Hartlötlegierung 7 bis 13 Gew.-% Si enthält.

7. Hartlötblech aus der Aluminiumlegierung nach einem der Ansprüche 1-6, wobei der Schmelzpunkt der Zwischenschicht und der des Kerns >615 °C beträgt.

8. Hartlötblech aus der Aluminiumlegierung nach einem der Ansprüche 1-7, wobei der Schmelzpunkt der Hartlötlegierung 550-590 °C beträgt.

9. Hartlötblech aus der Aluminiumlegierung nach einem der Ansprüche 1-8, wobei die Dicke der Zwischenschicht zu der Dicke der Hartlötlegierungsschicht 25-250 %, bevorzugt 50-150 % beträgt.

10. Hartlötblech aus der Aluminiumlegierung nach einem der Ansprüche 1-9, wobei die Dicke der Zwischenschicht 5-200 µm beträgt.

11. Hartlötblech aus der Aluminiumlegierung nach einem der Ansprüche 1-10, wobei das Hartlötblech eine Hartlötungs- oder eine Opferplattierungsschicht auf der Seite des Kerns gegenüber der Seite aufweist, die die Zwischenschicht und die Hartlötlegierung umfasst.

12. Hartlötblech aus der Aluminiumlegierung nach Anspruch 11, wobei die Opferplattierung auf der gegenüberliegenden Seite des Kerns durch eine Opfer- oder Hartlötschicht bedeckt ist.

13. Hartgelötetes Produkt, das ein Hartlötblech aus der Aluminiumlegierung nach einem der vorhergehenden Ansprüche umfasst, wobei die Zwischenschicht eine Opferschicht für den Kern ist.

14. Verfahren zum Hartlöten eines Wärmetauschers ohne Verwendung von einem Flussmittel unter Verwendung des Hartlötblechs aus der Aluminiumlegierung nach den Ansprüchen 1-12 für die Rippen, Rohre oder Verteilerplatten.

15. Wärmetauscher, der ein Aluminiumhartlötblech nach einem der Ansprüche 1 bis 12 umfasst.

16. Verwendung eines Hartlötblechs aus der Aluminiumlegierung nach einem der Ansprüche 1 bis 12 zum Produzieren von Wärmetauschern.
